# EUROPÄISCHE PATENTSCHRIFT

(11) **EP 2 318 745 B1**
(45) Veröffentlichungstag und Bekanntmachung des Hinweises auf die Patenterteilung: **01.05.2013**
(21) Anmeldenummer: 09779550.4
(22) Anmeldetag: 27.05.2009
(51) Int. Cl.: F16L 25/01, F16L 53/00, H05B 3/58

(54) **ANSCHLUSSVORRICHTUNG FÜR MEDIENFÜHRENDE, ELEKTRISCH BEHEIZBARE SCHLÄUCHE**
CONNECTING DEVICE FOR MEDIA-CONDUCTING, ELECTRICALLY HEATABLE HOSES
DISPOSITIF DE RACCORDEMENT POUR FLEXIBLES CHAUFFÉS ÉLECTRIQUEMENT CONDUISANT UN FLUIDE

(30) Priorität: 23.07.2008 DE 102008034238
(43) Veröffentlichungstag der Anmeldung: 11.05.2011
(73) Patentinhaber: ContiTech Techno-Chemie GmbH, 61184 Karben (DE)
(72) Erfinder: STEIN, Joachim, 61169 Friedberg (DE); DANIEL, Gunther, 61169 Friedberg (DE)
(74) Vertreter: Finger, Karsten
(86) Internationale Anmeldenummer: PCT/EP2009/056405
(87) Internationale Veröffentlichungsnummer: WO 2010/009926

(56) Entgegenhaltungen:
- EP-A1- 1 125 810
- EP-A2- 1 610 049
- WO-A1-2007/032034
- FR-A1- 2 924 786
- GB-A- 2 423 686
- US-A- 5 791 377

## Beschreibung

Die Erfindung betrifft eine Anschlussvorrichtung für medienführende, elektrisch beheizbare Schläuche gemäβ dem Oberbegriff von Anspruch 1. Eine solche Anschlussvorrichtung ist bekannt aus dem US5,791, 377.

Elektrisch beheizbare Schläuche für den Einsatz in Kraftfahrzeugen sind vielfältig bekannt. Das in diesen Schläuchen zwischen zwei Anschlussstellen fließende Medium wird von diesen Schläuchen beheizt.

Ein beheizbarer Schlauch mit wenigstens einem zur Erwärmung eines im Schlauch fließenden Mediums dienenden elektrischen Heizleiter ist beispielsweise aus der DE 102 01 920 A1 bekannt, wobei sich der Heizleiter über zumindest einen Teilbereich der Schlauchlänge erstreckt und aus einer metallischen Seele und einer Ummantelung besteht.

Der Heizleiter ist üblicherweise in einer Schicht des Schlauches eingebettet. Bei einem mehrschichtigen Schlauch kann der Heizleiter auch zwischen zwei Schichten angeordnet sein. Die Enden des Heizleiters sind freigelegt, um sie an eine zum Betreiben des Heizleiters erforderliche Spannungsquelle anschließen zu können. Üblicherweise sind die freigelegten Enden des Heizleiters an einem Ende des Schlauches angeordnet. Es ist aber auch möglich, dass jeweils ein freigelegtes Ende des Heizleiters an jeweils einem Ende des Schlauches angeordnet ist.

Die freigelegten Enden des Heizleiters werden mit elektrischen Steckerkontakten und/oder einem elektrischem Anschluss (Stecker) versehen und dann an eine Spannungsquelle angeschlossen. Da die Spannungsquelle üblicherweise nicht direkt am Schlauch angeordnet ist, müssen die freigelegten Enden des Heizleiters eine vorgegebene Länge aufweisen, um sie über den Stecker an die Spannungsquelle anschließen zu können.

Nachteilig daran ist, dass die eine vorgegebene Länge aufweisenden freigelegten Enden des Heizleiters ab ihrem Austritt aus dem Schlauch bis zu ihrer Anschlussstelle nahezu ungeschützt sind.

Um einen Schutz der freigelegten Enden des Heizleiters über eine vorgegebene Länge ab ihrem Austritt aus dem Schlauch bis zu ihrem Anschluss an ein elektrisches Bauteil (z.B. Spannungsquelle) zu gewährleisten, ist es aus EP 1 610 049 A2 bekannt, ein Rohrstück auf das Schlauchende aufzustecken. Der Mantel des Rohrstücks ist mit einem im Winkel zur Längsachse des Rohrstücks angeordneten, rohrförmigen Stutzen verbunden, in dem die freigelegten Enden des Heizleiters geführt werden, wobei der Mantel einen Durchlass zum Stutzen aufweist.

Durch diese Ausbildung wird im montierten Zustand des Schlauchverbindungssystems erreicht, dass die am Schlauchende über eine vorgegebene Länge freigelegten Enden des Heizleiters sofort nach ihrem Austritt aus dem Schlauch bis zu ihrer Kontaktstelle mit einem elektrischen Bauteil nicht freiliegen, sondern geschützt in dem mit dem Rohrstück verbundenen Stutzen geführt sind. Der Stutzen ist vorzugsweise im montierten Zustand nach Art eines 45°- oder 90°-Winkelstücks ausgebildet. Dadurch können die Enden des Heizleiters zu einem über dem Schlauch angeordneten elektrischen Bauteil geführt werden.

Die beschriebene Technik der beheizbaren Schläuche hat sich bei dem Transport von flüssigen Medien zwischen zwei Anschlussstellen bzw. Anschlussstutzen von Kfz-Aggregaten, wie z.B. zwischen Vorratsbehälter, Einspritzeinheit und Pumpe bei der Reduktionsmittelführung in Abgasnachbehandlungssystemen nach der Selectiv-Catalytic-Reduktions-Technologie (SCR), bewährt. Zwischen dem Vorratsbehälter, dem Fördermodul und dem Dosiermodul sind Schlauchleitungen zur Förderung des Reduktionsmittels vorhanden.

Die Fluidverbindung für das flüssige Medium zum Aggregat wird durch am Schlauchende befindliche, standardisierte Steckverbinder, insbesondere Schnellsteckverbinder, erreicht. An den zu verbindenden Kfz-Aggregaten sind gegenteilige, standardisierte Steckverbindertelle bauseitig angebracht.

Die Schnellsteckverbinder (Quick Connectoren) haben den Vorteil einer schnellen Schlauchmontage und sind in vielfältigen Ausführungsformen bekannt. An den Aggregaten sind sie am häufigsten als "Vaterteil" ausgebildet und an den Schlauchenden als "Mutterteil", das einen Anschlussstutzen für das Schlauchende aufweist, auf den das Ende des zu verbindenden Schlauchs mediendicht aufgeschoben und befestigt wird. Die mit dieser Steckverbindertechnologie mögliche, an sich einfache Montage wird durch das für die Heizleiterenden bestimmte, auf den Schlauch aufgeschobene Rohrstück gemäß EP 1 610 049 A2 behindert.

Der Erfindung liegt die Aufgabe zugrunde, eine Anschlussvorrichtung der eingangs beschriebenen Art zu schaffen, durch die die elektrischen Anschlussstellen der Schlauchheizleiter weniger störend, montagefreundlicher und mit geringerem technischen Aufwand ausgebildet sind.

Die Aufgabe wird erfindungsgemäß durch die Merkmale im Kennzeichen des Anspruchs 1 gelöst.

Die Enden des mindestens einen elektrischen Heizleiters werden in das Gehäuse des Steckverbinders eingeführt und dort elektrisch kontaktiert. Das Gehäuse wird danach verschlossen. Der Vorteil liegt darin, dass die elektrischen Heizleiterenden als auch die elektrischen Kontaktstellen geschützt sind gegen Feuchtigkeit, Umwelteinflüsse oder äußere Beschädigung. Der technische Aufwand zur Herstellung der Kontaktstelle zwischen Heizleitern und Spannungsquelle wird verringert. Der Steckverbinder selbst ist mit einem elektrischen Steckanschluss ausgestattet, an dem ein externer Elektrostecker anschließbar ist.

Erfindungsgemäβ weisen die Kontaktbleche nach unten verlängerte Abschnitte auf, die im Grundkörper des Gehäuses befestigt oder eingegossen sind. Die Stabilität der elektrischen Kontaktstelle wird somit verbessert. Ferner sind die herausragenden Enden der Steckkontakte von einem muffenartigen, einseitig offenen Ansatz an dem Gehäuse umgeben. Ein externer Elektroanschluss kann so in der entsprechend geformten Abdeckung sicher eingesteckt werden.

In vorteilhafter Ausgestaltung der Erfindung ist das Gehäuse des Steckverbinders aus Kunststoff und durch Spritzgießen hergestellt. Dadurch wird eine wasserdichte Anschlussvorrichtung geschaffen, die schlag- und stoßfest ist und sich durch eine erhöhte Stabilität auszeichnet.

In weiterer vorteilhafter Ausgestaltung der Erfindung ist der die Kontaktstelle von Heizleiter und Kontaktblech abdeckende Bereich des Gehäuses ein separates Teil, das als Abdeckung mit dem übrigen Grundkörper des Gehäuses verbindbar ist. Es dient als Fixierungshilfe der Steckkontakte.

Die erfindungsgemäße Anschlussvorrichtung hat den Vorteil, dass an das vormontierte Schlauchleitungssystem (Schlauch und schlauchseitiger Steckverbinder) kundenspezifische externe Elektrostecker montiert werden können. Ein weiterer Vorteil dieser Erfindung ist, dass der zurzeit notwendige Kabelbaum zwischen Leitungen und Kundenkabelbaum entfallen kann.

Anhand der Zeichnung wird nachstehend ein Ausführungsbeispiel der Erfindung näher erläutert. Es zeigt
- Fig. 1: eine Anschlussvorrichtung mit einem schlauchseitigen, weiblichen Steckverbinder mit einem Anschlussstutzen zur festen Aufnahme des Endbereichs eines elektrisch beheizbaren Schlauches,
- Fig. 2: die Anschlussvorrichtung nach Fig. 1 unter Fortlassung der Gehäuseabdeckung im Bereich des Elektroanschlusses;
- Fig. 3: in Einzeldarstellung die die Heizleiterenden mit Steckerstiften elektrisch verbindenden Kontaktbleche,
- Fig. 4: eine erfindungsgemäβe Ausbildung der Kontaktbleche;
- Fig. 5: eine geschnittene Seitenansicht der Anschlussvorrichtung;
- Fig. 6: die Anschlussvorrichtung mit angeschlossenem externen Elektrostecker.

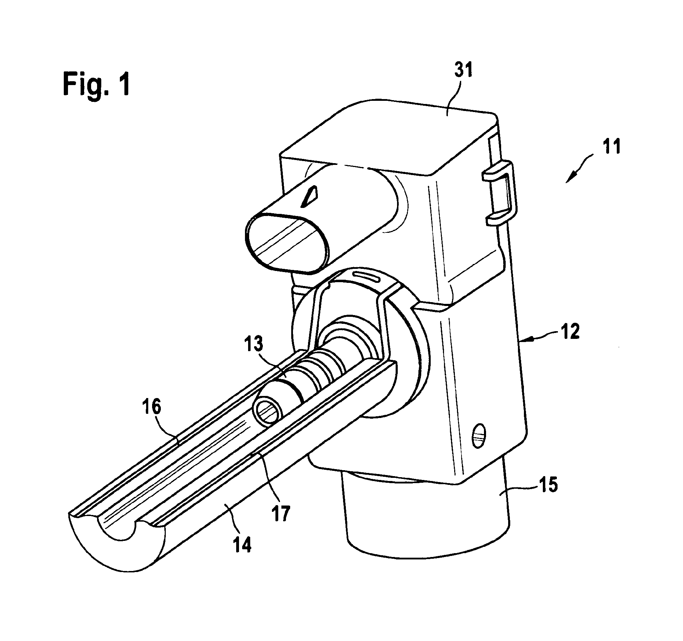

Die in Fig.1 gezeigte Anschlussvorrichtung 11 weist als Hauptbauteil einen schlauchseitigen Steckverbinder 12 auf, auf dessen Anschlussstutzen 13 das Ende eines elektrisch beheizbaren Schlauches 14 aufgeschoben und befestigt ist. Der Steckverbinder 12 ist ein 90°-Standard-Schnellsteckverbinder mit einem mütterlichen Steckteil 15. Die mütterliche Steckkonstruktion ist in der perspektivischen Darstellung nicht sichtbar und liegt um 90° versetzt zum Anschlussstutzen 13.

Die damit ausgebildete Anschlussvorrichtung 11 wird nach der erfolgten Konfektion des Schlauchendes auf dem Anschlussstutzen 13 an einem hier nicht gezeigten Aggregat, z.B. einem Vorratsbehälter, einer Einspritzeinheit, einer Pumpe etc., das als Gegenstück ein väterliches Steckverbinderteil bereits bauseitig angebracht aufweist, durch einfaches Aufstecken montiert.

Der nur mit einem kurzen Abschnitt gezeigte, aufgeschnitten dargestellte Schlauch 14 wird über zwei Heizleiter 16 und 17, auch oft Heizlitzen genannt, erwärmt, die in den Schlauchaufbau, der hier nicht näher beschrieben ist, integriert bzw. eingebettet sind. Zum Konfektionieren an elektrische Stecker wurden die einzelnen Heizleiter 16 und 17 am Ende des Schlauches 14 auf einer bestimmten Länge freigelegt. Das dadurch entstandene leiterfreie Schlauchstück wurde abgeschnitten.

Danach wurde der Schlauch 14 mit seinem Ende auf den Anschlussstutzen 13 des Steckverbinders 12 geschoben. Ein nicht gezeigter Pressring wurde auf dem Schlauch 14 zum Fixieren desselben auf dem Anschlussstutzen 13 verpresst.

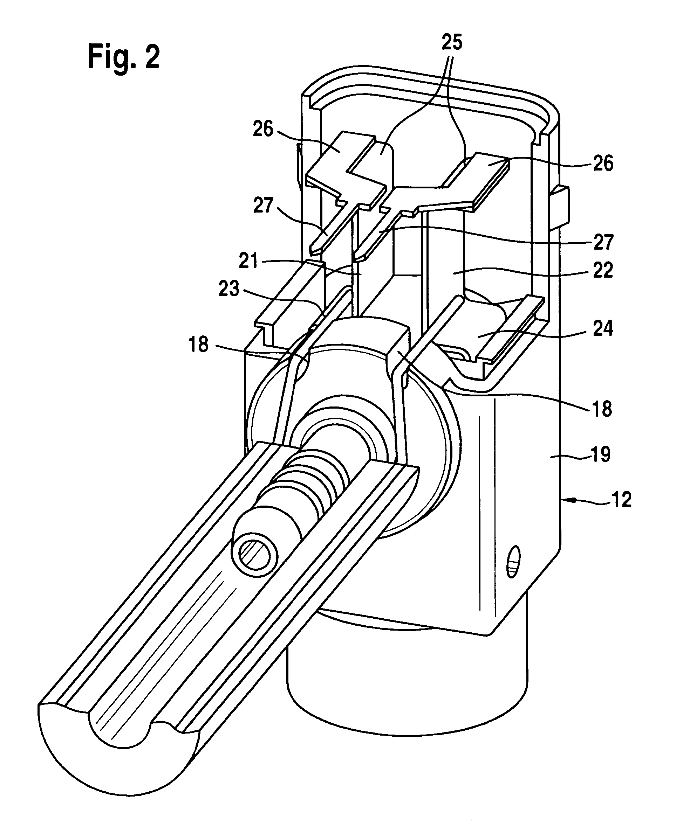

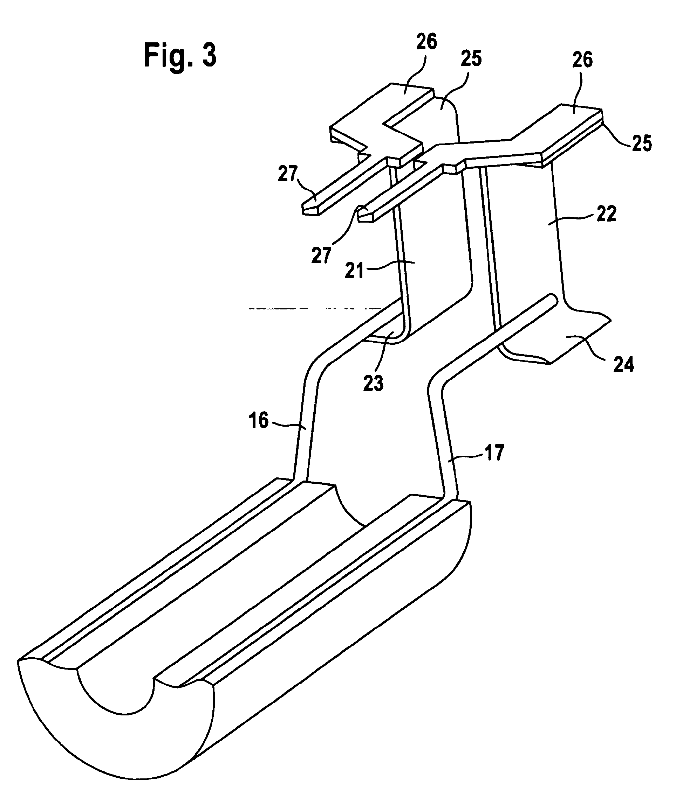

Die freien Enden der beiden Heizleiter 16 und 17 sind im Bereich des Anschlussstutzens 13 über zwei Durchbrechungen 18 im Gehäuse 19 des Steckverbinders 12 in dessen Inneres geführt (Fig. 2). Im Inneren des Gehäuses 19 sind zwei benachbarte, nach oben ragende Kontaktbleche 21,22 fest eingesetzt. Auf dem jeweiligen nach außen abgewinkelten Fuß 23 bzw. 24 des Kontaktbleches 21 bzw. 22 ist jeweils ein Heizleiterende fest angelötet. Die oberen Enden der Kontaktbleche 21, 22 sind jeweils nach außen im rechten Winkel abgeknickt und tragen auf der jeweiligen dadurch gebildeten horizontalen Fläche 25 jeweils einen Elektrokontakt 26, der horizontal in je einem Steckkontakt 27 ausläuft (Fig. 3).

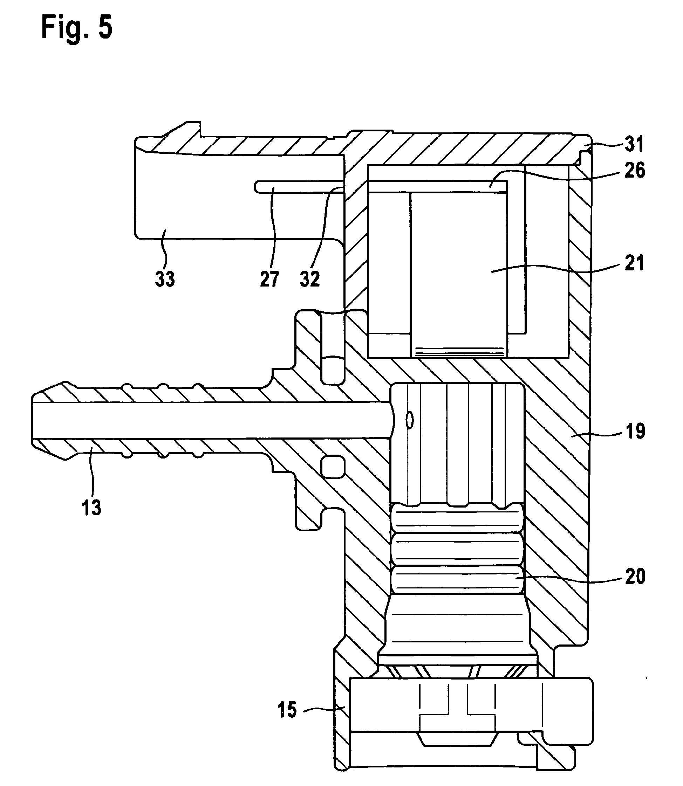

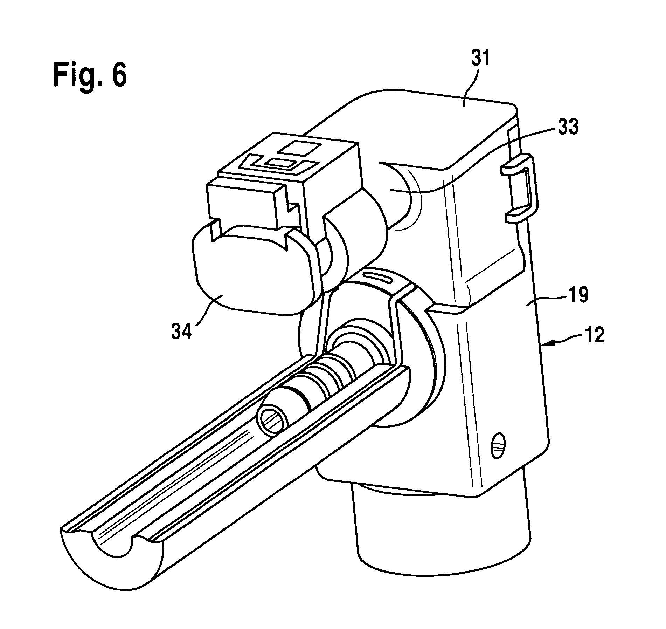

Diese beiden parallel nebeneinander liegenden Steckkontakte 27 werden durch eine mit dem Gehäuse 19 verbundene Abdeckung 31 abgeschirmt. Die elektrische Verbindungsstelle zwischen Heizleiterenden 16,17 und den elektrischen Steckkontakten 27 ist nun geschützt im Inneren des Gehäuses 19 des Steckverbinders 12 angeordnet, der auch die hier nicht näher beschriebene Steckmechanik 20 aufnimmt. Lediglich die Enden der beiden Steckkontakte 27 ragen durch zwei Öffnungen 32 (Fig. 5) in der Abdeckung 31 in einen muffenartigen, sich vom Gehäuse 19 bzw. 31 weg erstreckenden hohlen Ansatz 33, der zur Aufnahme eines externen Elektroanschlusses 34 (Fig. 6) passend ausgebildet ist.

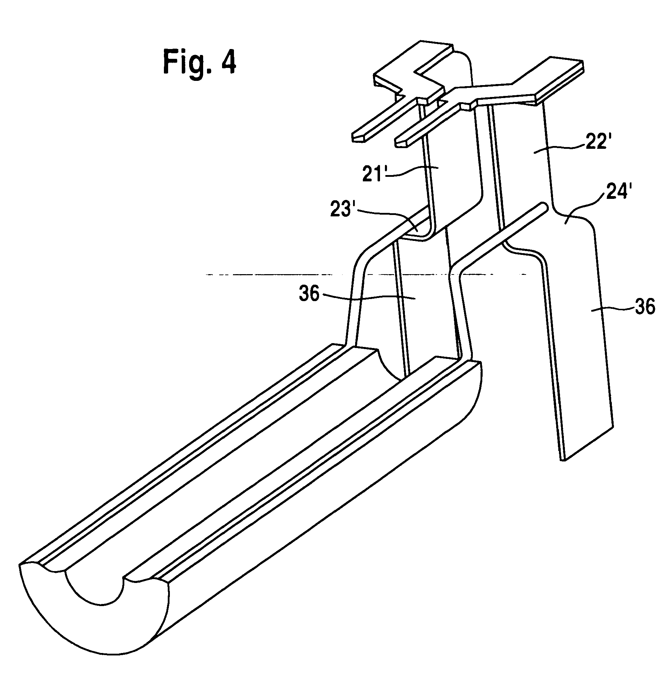

In Fig. 4 wird eine erfindungsgemäβe Ausbildung der Kontaktbleche 21' und 22' dargestellt. An den Füßen 23' und 24' der Kontaktbleche 21', 22' sind sich nach unten erstreckende Verlängerungen 36 vorhanden, die in dem Grundkörper des Steckverbinders 12 beispielsweise durch Spritzgießen fest angeordnet sind.

### Bezugszeichenliste

### (Teil der Beschreibung)

- 11: Anschlussvornchtung
- 11: Steckverbinder, schlauchseitig
- 12: Anschlussstutzen
- 13: Schlauch
- 14: Steckteil, mütterlich
- 15: Heizleiter
- 16: Heizleiter
- 17: Durchbrechungen
- 18: Gehäuse
- 19: Steckmechanik
- 21, 21': Kontaktblech
- 22, 22': Kontaktblech
- 23, 23': Fuß
- 24, 24': Fuß
- 25: Horizontale Flächen
- 26: Elektrokontakte
- 27: Steckkontakte
- 31: Abdeckung
- 32: Öffnungen
- 33: Ansatz, muffenartig
- 34: Externer Elektroanschluss
- 36: Verlängerungen

## Patentansprüche

1. Anschlussvorrichtung (11) für medienführende, elektrisch beheizbare Schläuche (14), wobei die Anschlssvorrichtung (11) als Steckverbindung (12) ausgebildet ist, bei der mindestens ein Schlauchende (14) einen Steckverbinder (12) aufweist, der auf ein bauseitig an einem Kfz-Aggregat angebrachtes, gegenteiliges Steckverbinderteil aufsteckbar ist. wobei der elektrisch beheizbare Schlauch mit (14) mit zwei in dem Schlauch über mindestens einen Teilbereich der Schlauchlänge einsebetteten elektrischen Heizleitern (16,17) versehen ist, dessen Ende(n) stirnseitig aus dem Schlauch (14) zur Konfektion mit einem Stecker oder zum Verbinden mit einem elektrischen Bauteil über eine vorgesehene Länge herausgeführt sind, wobei
• der schlauchseitige Steckverbinder (12) einen Anschlussstutzen (13) zur Aufnahme des Schlauchendes aufweist,
• die Enden der Heizleiter (16,17) im Bereich des Anschlussstutzens (13) in das Gehäuse (19) des schlauchseitigen Steckverbinders (12) geführt sind,
• die Enden der Heizleiter (16,17) mit je einem Kontaktblech (21, 22) verbunden sind, die jeweils mit Steckkontakten (27) versehen sind,
• die Enden der Steckkontakte (27) aus dem Gehäuse (19) ragen und eine Anschlussstelle für einen externen elektrischen Steckanschluss (34) bilden, **dadurch gekennzeichnet,**
• **dass** die Kontaktbleche (21', 22') nach unten verlängerte Abschnitte (36) aufweisen, die im Grundkörper des Gehäuses (19) befestigt oder eingegossen sind,
• **dass** die herausragenden Enden der Steckkontakte (27) von einem muffenartigen, einseitig offenen Ansatz (33) an dem Gehäuse (19) umgeben sind.

2. Anschlussvorrichtung nach Anspruch 1, **dadurch gekennzeichnet,**
**dass** das Gehäuse (19) aus Kunststoff ist und durch Spritzgießen hergestellt ist.

3. Anschlussvorrichtung nach Anspruch 1, **dadurch gekennzeichnet,**
**dass** der die Kontaktstelle von Heizleiter (16, 17) und Kontaktblech (21, 22) abdeckende Bereich des Gehäuses (19) ein separates Teil (31) ist, das als Abdeckung mit dem übrigen Grundkörper des Gehäuses (19) verbindbar ist.

## Claims

1. Connecting device (11) for media-conducting, electrically heatable hoses (14), wherein the connecting device (11) is embodied as plug-in connection (12) where at least one hose end (14) has a plug-in connector (12) which can be plugged onto a mating plug-in connector part attached to the structure of a motor vehicle assembly,
wherein the electrically heatable hose (14) is provided with two electrical heating conductors (16, 17) which are embedded in the hose over at least a part of the length of the hose and the end or ends thereof is/are led out of a predefined length at the end side from the hose (14) in order to be fitted with a plug or to connect to an electrical component, wherein
• the hose-side plug-in connector (12) has a connecting fitting (13) for receiving the end of the hose,
• the ends of the heating conductors (16, 17) are guided into the housing (19) of the hose-side plug-in connector (12) in the region of the connecting fitting (13),
• the ends of the heating conductors (16, 17) are connected to one contact plate (21, 22) each, said contact plates (21, 22) being each provided with plug-in contacts (27),
• the ends of the plug-in contacts (27) project out of the housing (19) and form a connecting point for an external electrical plug-connection (34), **characterized**
• **in that** the contact plates (21', 22') have downwardly lengthened sections (36) which are attached or cast in the base body of the housing (19), and
• **in that** the projecting-out ends of the plug-in contacts (27) are surrounded by a sleeve-like attachment (33), open on one side, on the housing (19).

2. Connecting device according to Claim 1, **characterized in that** the housing (19) is made of plastic and is manufactured by injection moulding.

3. Connecting device according to Claim 1, **characterized in that** the region of the housing (19) which covers the contact point of the heating conductor (16, 17) and contact plate (21, 22) is a separate part (31) which can be connected as a cover to the rest of the base body of the housing (19).

## Revendications

1. Dispositif de raccordement (11) pour des flexibles (14) pouvant être chauffés électriquement, conduisant des fluides, le dispositif de raccordement (11) étant réalisé sous forme de connecteur enfichable (12), au moins une extrémité du flexible (14) présentant un connecteur enfichable (12) qui peut être enfiché sur une partie de connecteur enfichable conjuguée montée du côté de la structure sur un équipement d'un véhicule automobile,
le flexible (14) pouvant être chauffé électriquement étant pourvu de deux conducteurs chauffants (16, 17) électriques noyés dans le flexible sur au moins une région partielle de la longueur du flexible, dont les extrémités sont sorties du côté frontal hors du flexible (14) pour s'adapter à une fiche ou pour la connexion à un composant électrique sur une longueur prévue,
- le connecteur enfichable (12) du côté du flexible présentant un raccord (13) pour recevoir l'extrémité du flexible,
- les extrémités des conducteurs chauffants (16, 17) dans la région du raccord (13) étant guidées dans le boîtier (19) du connecteur enfichable (12) du côté du flexible,
- les extrémités des conducteurs chauffants (16, 17) étant connectées chacune à une tôle de contact (21, 22), lesquelles tôles de contact sont pourvues chacune de contacts enfichables (27),
- les extrémités des contacts enfichables (27) faisant saillie hors du boîtier (19) et formant un point de raccordement pour un raccord enfichable (34) électrique externe,
**caractérisé en ce que**
- les tôles de contact (21', 22') présentent des portions (36) prolongées vers le bas, qui sont fixées ou moulées dans le corps de base du boîtier (19),
- les extrémités saillantes des contacts enfichables (27) sont entourées par une pièce saillante (33) ouverte d'un côté, en forme de manchon, sur le boîtier (19).

2. Dispositif de raccordement selon la revendication 1, **caractérisé en ce que** le boîtier (19) est en plastique et est fabriqué par moulage par injection.

3. Dispositif de raccordement selon la revendication 1, **caractérisé en ce que** la région du boîtier (19) recouvrant le point de contact des conducteurs chauffants (16, 17) et de la tôle de contact (21, 22) est une pièce séparée (31) qui peut être connectée au reste du corps de base du boîtier (19) en tant que recouvrement.
